# EUROPEAN PATENT SPECIFICATION

(11) **EP 1 053 930 B1**
(45) Date of publication and mention of the grant of the patent: **02.08.2006**
(21) Application number: 00201795.2
(22) Date of filing: 22.05.2000
(51) Int. Cl.: B62D 53/06, B62D 25/20, B60P 1/64

(54) **Vehicle**
Fahrzeug
Véhicule

(30) Priority: 21.05.1999 NL 1012122
(43) Date of publication of application: 22.11.2000
(73) Proprietor: KONINKLIJKE NOOTEBOOM TRAILERS B.V., 6603 BV Wijchen (NL)
(72) Inventor: Van de Vondervoort, Vincentius Hendricus Antony, 6605 EA Wijchen (NL)
(74) Representative: Bartelds, Erik

(56) References cited:
- EP-A- 0 385 776
- FR-A- 2 370 618
- FR-A- 2 486 011
- GB-A- 719 751

## Description

The invention relates to a vehicle, comprising a chassis and an undercarriage connected thereto, wherein the chassis comprises at least one upward curved chassis beam and a loading floor connected thereto. Such a vehicle is known, for instance in the form of a flat bed trailer marketed by applicant.

Such a flat bed trailer is provided with a goose-neck for fixing to a tractor and a chassis which is connected thereto and consists of a central beam or girder, or of two parallel beams or girders on the outside, and which is provided with a multi-axle undercarriage on the side remote from the goose-neck. The girder or girders herein supports/support a loading floor on which the cargo can be placed.

In such vehicles a trend can be discerned of embodying the chassis beams increasingly lower. This offers advantages, since in many countries the maximum transport height of vehicles is limited by law. Lower chassis beams thus leave more space for a higher cargo. However, because the space within the chassis beams, which in practice is usually used for feed-through of all types of lines, is also limited by the lower embodiment of these beams, the wall thickness of the beams is also being reduced to an increasing extent, whereby the inner space thereof is thus retained. This is particular the case with vehicles which are adjustable in the length, and wherein in the retracted situation the lines lie in a loop in the chassis beams.

This lower height and smaller wall thickness of the chassis beams have the result that these latter must be embodied in higher-grade types of steel in order to still achieve the required strength. It is however not possible herein to also preserve the original rigidity. This therefore has the consequence that the chassis beams increasingly take a less rigid form, and will thus sag more under the influence of both their own weight and the weight of the cargo arranged on the vehicle.

Chassis beams are at present therefore often given an upward curved or convex form in order to compensate the troublesome consequences of this greater sagging. In the case of a flat bed trailer the ground clearance, which is per se limited, is of crucial importance and the upward curvature of the chassis beams is chosen such that these are as flat as possible in the loaded situation, and the ground clearance is thus constant along the whole length of the loading floor. In the case of an extensible low bed semi-trailer or flat trailer the chassis beams will generally take a curved form such that they are as flat as possible in unloaded but extended situation. In this situation it is generally self-supporting cargo which is transported with such vehicles, which cargo will rest only on the coupling between the vehicle and the tractor and on the undercarriage. This therefore causes no sagging of the chassis beams.

The known vehicles with convex chassis beams have the drawback that the loading floor defined by the girders is curved under all conditions. This is a particular problem in the case of low bed semi-trailers and flat trailers when containers are transported, since these latter will often not be sufficiently heavily loaded to cause the girders to sag to a completely flat position. Because containers have to be fastened to the loading floor by means of rotatable and slidable locking elements, so-called "twist-locks", which allow only a limited clearance, the convex form of the girders has the result that not all four "twist-locks" of the container can be fastened to the loading floor, whereby the container is thus not firmly secured during transport.

The invention now has for its object to provide a vehicle of the above stated type, wherein this problem does not occur. According to the invention this is achieved by the features of claim 1. At least the loading floor is substantially flat on the upper side. Cargo which is flat on the underside can in this way be transported simply and in safe manner, while the adverse effects of the sagging of the chassis beam or beams nonetheless remain limited.

Moreover, the or each chassis beam is herein substantially flat on the upper side. In this manner the flat loading floor can be arranged thereon without further modifications.

In order to enable an increase in the capacity of the vehicle, the or each chassis beam can be adjustable in the length and have at least two curved beam parts which are slidable relative to each other and at least one of which can be connected to the loading floor and have a substantially flat upper side.

The beam parts are preferably telescopically slidable relative to each other, and at least the outer beam part has a substantially flat upper side. A flat and extensible loading floor can thus be obtained, while the majority of the beam parts can still take a curved form. The outer beam part can herein have an inner contour which corresponds at least partly with the curvature of the or each beam part slidable therein. This contour corresponding with the curvature of the other beam parts can be formed by a curved underside and at least one filling element protruding inwardly from the flat upper side, while a number of filling elements are preferably even arranged evenly distributed in longitudinal direction of the outer beam part.

The radius of curvature of the chassis beam is preferably at least an order greater than the length thereof, and can lie between 10 and 100 times, more particularly 30 to 60 times the length of this chassis beam.

The invention will now be elucidated on the basis of an embodiment, wherein reference is made to the annexed drawing, in which:
figures 1a and 1b are respectively a top view and a side view of a pulled vehicle with adjustable length according to the invention in retracted situation,
figure 2 is a side view on smaller scale of the vehicle in fully extended situation,
figure 3 is a longitudinal section through a chassis beam of the vehicle of figures 1 and 2 in the retracted situation,
figure 4 shows a front view of the chassis beam of figure 3,
figures 5a and 5b show schematically and on highly exaggerated scale in vertical height the length-adjustable chassis beam in the retracted and extended situation, and
figure 6 shows schematically the sagging of the chassis beam in loaded situation.

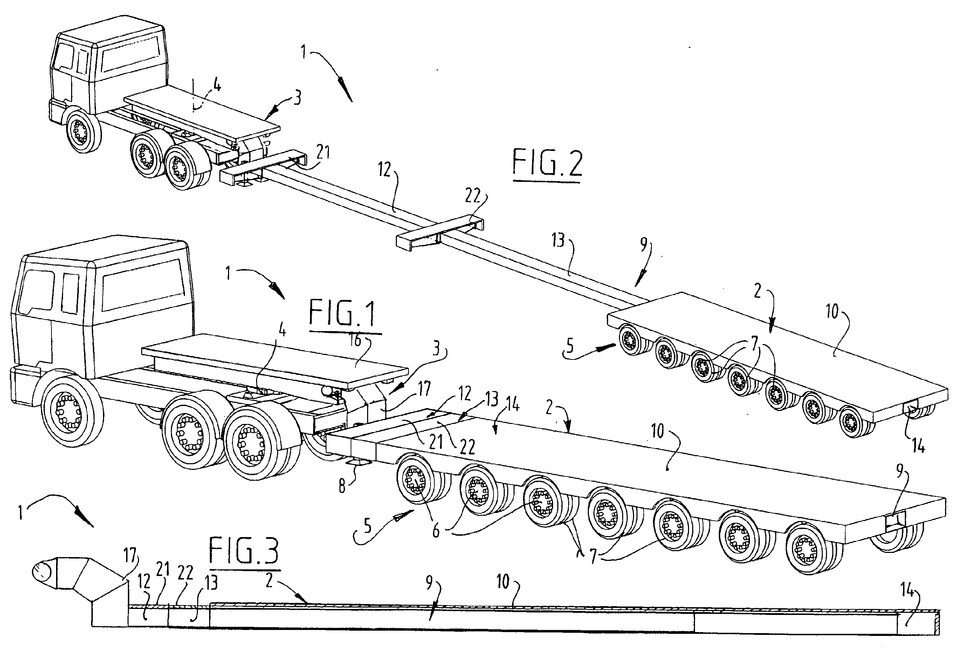

A vehicle 1, in the example shown a low bed semi-trailer (fig. 1), comprises a chassis 2 which is provided on the front side with a goose-neck 3, which via a rotatable coupling plate 4 can be connected to a tractive vehicle (not shown here). Goose-neck 3 is herein formed by a flat part 16 and, pivotally connected thereto, an upright end part 17 of a chassis beam 9 to be further discussed hereinbelow. Chassis 2 is provided on the rear side with an undercarriage 5, which in the shown embodiment has six axles 6 with wheels 7, wherein the five rearmost wheel sets take a steerable form. At the front side of vehicle 1 in the vicinity of goose-neck 3 are further arranged two extending supports 8 on which vehicle 1 rests when it is not resting on a tractor.

Chassis 2 is formed by chassis beam 9 and a loading floor 10 supported thereby. Loading floor 10 is supported by cross members 11 mounted on chassis beam 9. Chassis beam 9 and therewith chassis 2 is adjustable in the length in the shown embodiment. For this purpose chassis beam 9 is assembled from three beam parts 12, 13 and 14 telescopically slidable into each other (fig. 2).

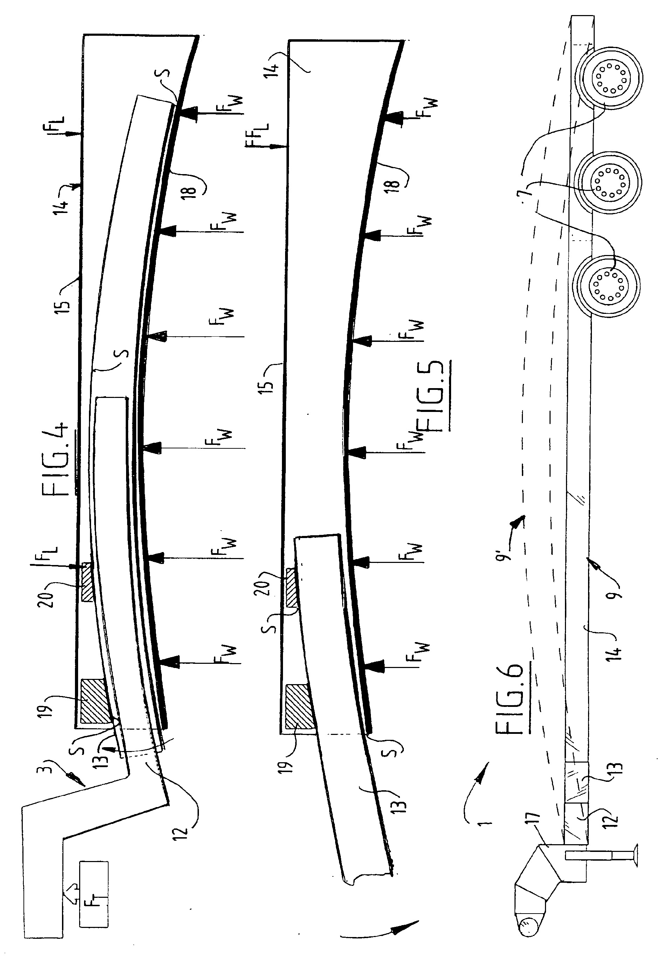

In order to limit the sagging of chassis beam 9 in the loaded (or the unloaded but extended) situation, it is further formed such that in unloaded and/or retracted situation it is slightly convex (shown in broken lines in fig. 6). This is particularly important in relatively low vehicles, such as flat bed trailers and low bed semi-trailers, where there is not enough space to give the chassis beam so high a form that the sagging thereof would also be acceptable in the case of a completely straight beam. Beam parts 12, 13 and 14 are thus slidable relative to each other along a curved path. At least the inner beam parts 12 and 13, i.e. those beam parts which have the smallest cross-section in the embodiment shown, themselves also take a curved form herein.

The outer beam part 14 however does not take a curved form or not a completely curved form, and has in any case a substantially flat upper side 15. In this manner is ensured that the loading floor 10 mounted on chassis beam 9 can also be substantially flat, which is important for instance in the transport of containers which, using four so-called "twist-locks" arranged in loading floor 10, must be secured to loading floor 10 at their corner points or "corner castings". If the upper side of chassis beam 9, and therewith loading floor 10, were to have an upward curved form, not all "twist-locks" would be able to reach the corner points of the container. In addition, the flat upper side of the outer beam part 14 has the advantage that chassis beam 9 can hereby be manufactured lying upside down in a flat mould.

The outer beam part 14 has an inner contour which corresponds with the curvature of the beam parts 12 and 13 slidable therein. For this purpose this beam part 14 is provided in the embodiment shown with a curved bottom 18 and a number of filling elements 19, 20 protruding from upper side 15, which is also flat on the inner side. The foremost filling element 19 is herein intended to function as supporting surface S in determined load conditions and to transmit loads from outer beam part 14 to the upper side of the subsequent beam part 13. Such a load condition could occur in the embodiment shown if chassis beam 9 is retracted (fig. 5a). In the shown situation the underside of beam part 13 would in addition be loaded at the rear by the bottom 18 of outer beam part 13, which forms a second supporting surface S. (In these figures arrows Fw herein show the supporting force exerted by wheels 7, Ft is the bearing force of the tractor and arrows Fl indicate the load by the cargo). The rearmost filling element 20 on the other hand functions to transfer loads between beam parts 13 and 14 in other load situations, one of which is shown here in the extended situation of chassis beam 9 (fig. 5b).

More filling elements could of course also be present instead of these two filling elements 19 and 20 or use could be made of a continuous filling element with the desired contour. It is of course also possible for the outer beam part 14 as a whole to take a curved form, and be provided with an upper girder which is fixed thereon via one or more web plates and on which the loading floor can be arranged. On the other hand it is also possible to envisage the loading floor resting directly on the curved beam only at the highest point, and filling elements or supports being arranged between the other, lower-lying parts of the beam and the loading floor.

In the retracted situation of chassis 2 filling pieces 21, 22 can otherwise be placed on the front side thereof on the slightly protruding ends of the inner beam parts 12, 13 which, as a result of their curvature, are in any case situated somewhat lower than the upper surface 15 of beam part 14 and thus loading floor 10. In this manner a flat loading floor is obtained along the whole length of vehicle 1.

Although the invention is described above with reference to an embodiment, it is not limited thereto. The vehicle could thus also have a fixed length, wherein a single, continuous chassis beam could thus be applied. In the case of an extensible vehicle, more or fewer than the three beam parts shown could be applied, while beam parts with a cross-sectional shape other than that shown could also be envisaged. It is even possible in this case to envisage beam parts with an open profile shape, which are not slidable into but alongside each other. Finally, application of the invention is not limited to low bed semi-trailers, but other vehicles such as flat trailers or flat bed trailers can also be embodied in this manner.

The scope of the invention is therefore limited solely by the now following claims.

## Claims

1. Vehicle (1) comprising a chassis (2) and an undercarriage (5) connected thereto, wherein the chassis (2) comprises at least one upward curved chassis beam (9) and a loading floor (10) connected thereto, **characterized in that** at least the loading floor (10) is substantially flat on the upper side, and **in that** the or each chassis beam (9) is substantially flat on the upper side.

2. Vehicle (1) as claimed in claim 1, **characterized in that** the or each chassis beam (9) is adjustable in the length and has at least two curved beam parts (12, 13, 14) which are slidable relative to each other and at least one (14) of which is connected to the loading floor (10) and has a substantially flat upper side (15).

3. Vehicle (1) as claimed in claim 2, **characterized in that** the beam parts (12, 13, 14) are telescopically slidable relative to each other, and at least the outer beam part (14) has a substantially flat upper side (15).

4. Vehicle (1) as claimed in claim 3, **characterized in that** the outer beam part (14) has an inner contour which corresponds at least partly with the curvature of the or each beam part (12, 13) slidable therein.

5. Vehicle (1) as claimed in claim 4, **characterized in that** the outer beam part (14) has a curved underside (18) and at least one filling element (19, 20) protruding inwardly from the flat upper side (15).

6. Vehicle (1) as claimed in claim 5, **characterized by** a number of filling elements (19, 20) arranged evenly distributed in longitudinal direction of the outer beam part (14).

7. Vehicle (1) as claimed in any of the foregoing claims, **characterized in that** the radius of curvature of the chassis beam (9) is at least an order greater than the length thereof.

8. Vehicle (1) as claimed in claim 7, **characterized in that** the radius of curvature of the chassis beam (9) amounts to between 10 and 100 times, more particularly 30 to 60 times the length thereof.

9. Vehicle (1) as claimed in any of the foregoing claims, **characterized by** means (4) for coupling the vehicle (1) to a tractor.

## Patentansprüche

1. Fahrzeug (1), aufweisend ein Chassis (2) und ein damit verbundenes Fahrwerk (5), wobei das Chassis (2) mindestens einen aufwärts gewölbten Chasisträger (9) und einen damit verbundenen Ladeboden (10) aufweist, **dadurch gekennzeichnet, dass** mindestens der Ladeboden (10) im wesentlichen auf der oberen Seite flach ist, und dass der oder jeder Chassisträger (9) im wesentlichen auf der Oberseite flach ist.

2. Fahrzeug (1) gemäß Anspruch 1, **dadurch gekennzeichnet, dass** der oder jeder Chassisträger (9) in der Länge anpassbar ist und mindestens zwei gewölbte Trägerteile (12, 13, 14) aufweist, die relativ zueinander gleitbar sind, und mindestens einer (14) von diesen mit dem Ladeboden (10) verbunden ist und im wesentlichen eine flache obere Seite (15) hat.

3. Fahrzeug (1) gemäß Anspruch 2, **dadurch gekennzeichnet, dass** die Trägerteile (12, 13, 14) relativ zueinander teleskopisch gleitbar sind, und mindestens ein äußerer Trägerteil (14) eine im wesentlichen flache obere Seite (15) aufweist.

4. Fahrzeug (1) gemäß Anspruch 3, **dadurch gekennzeichnet, dass** der äußere Trägerteil (14) eine innere Kontur hat, die mindestens teilweise der Wölbung des oder jeden Trägerteils (12, 13), die darin gleitbar sind, entspricht.

5. Fahrzeug (1) gemäß Anspruch 4, **dadurch gekennzeichnet, dass** der äußere Trägerteil (14) eine gewölbte Unterseite (18) und mindestens ein Füllelement (19, 20), das von der flachen Oberseite (15) nach innen hervorsteht, aufweist.

6. Fahrzeug (1) gemäß Anspruch 5, **gekennzeichnet durch** eine Anzahl von Füllelementen (19, 20), die in Längsrichtung des äußeren Trägerteils (14) gleich verteilt angeordnet ist.

7. Fahrzeug (1) gemäß einem der vorhergehenden Ansprüche, **dadurch gekennzeichnet, dass** der Radius der Wölbung des Chassisträgers (9) mindestens um eine Ordnung größer ist als die Länge desselben.

8. Fahrzeug (1) gemäß Anspruch 7, **dadurch gekennzeichnet, dass** der Radius der Wölbung des Chassisträgers (9) zwischen zehn und hundert Mal, insbesondere dreißig bis sechzig Mal, der Länge desselben entspricht.

9. Fahrzeug (1) gemäß einem der vorhergehenden Ansprüche, **gekennzeichnet durch** Mittel (4) zur Kupplung des Fahrzeugs (1) an eine Zugmaschine.

## Revendications

1. Véhicule (1) comportant un châssis (2) et un train roulant (5) relié à celui-ci, dans lequel le châssis (2) comporte au moins une poutre de châssis incurvée vers le haut (9) et un plancher de chargement (10) relié à celle-ci, **caractérisé en ce qu'**au moins le plancher de chargement (10) est sensiblement plat sur le côté supérieur, et
**en ce que** la ou chaque poutre de châssis (9) est sensiblement plate sur le côté supérieur.

2. Véhicule (1) selon la revendication 1, **caractérisé en ce que** la ou chaque poutre de châssis (9) est réglable dans la longueur, et a au moins deux parties de poutre incurvées (12, 13, 14) qui peuvent coulisser l'une par rapport à l'autre, et dont au moins une (14) est reliée au plancher de chargement (10), et a un côté supérieur sensiblement plat (15).

3. Véhicule (1) selon la revendication 2, **caractérisé en ce que** les parties de poutre (12, 13, 14) peuvent coulisser de manière télescopique les unes par rapport aux autres, et au moins la partie de poutre extérieure (14) a un côté supérieur sensiblement plat (15).

4. Véhicule (1) selon la revendication 3, **caractérisé en ce que** la partie de poutre extérieure (14) a un contour intérieur qui correspond au moins partiellement à la courbure de la ou de chaque partie de poutre (12, 13) pouvant coulisser dedans.

5. Véhicule (1) selon la revendication 4, **caractérisé en ce que** la partie de poutre extérieure (14) a un côté inférieur incurvé (18) et au moins un élément de remplissage (19, 20) faisant saillie vers l'intérieur à partir du côté supérieur plat (15).

6. Véhicule (1) selon la revendication 5, **caractérisé par** plusieurs éléments de remplissage (19, 20) agencés et répartis de manière régulière dans la direction longitudinale de la partie de poutre extérieure (14).

7. Véhicule (1) selon l'une quelconque des revendications précédentes, **caractérisé en ce que** le rayon de courbure de la poutre de châssis (9) est au moins supérieur d'un ordre de grandeur à sa longueur.

8. Véhicule (1) selon la revendication 7, **caractérisé en ce que** le rayon de courbure de la poutre de châssis (9) s'élève entre 10 et 100 fois, plus particulièrement 30 et 60 fois sa longueur.

9. Véhicule (1) selon l'une quelconque des revendications précédentes, **caractérisé par** des moyens (4) pour coupler le véhicule (1) à un tracteur.
